Europäisches Patentamt

**European Patent Office**

**Office européen des brevets**

(11) Veröffentlichungsnummer: **0 187 218**
**A2**

(12) # EUROPÄISCHE PATENTANMELDUNG

(21) Anmeldenummer: **85114124.2**

(22) Anmeldetag: **06.11.85**

(51) Int. Cl.⁴: **G 02 F 1/13**

(30) Priorität: **20.12.84 DE 3446474**

(43) Veröffentlichungstag der Anmeldung:
**16.07.86 Patentblatt 86/29**

(84) Benannte Vertragsstaaten:
**CH FR GB LI NL**

(71) Anmelder: **Messerschmitt-Bölkow-Blohm Gesellschaft
mit beschränkter Haftung
Robert-Koch-Strasse
D-8012 Ottobrunn(DE)**

(72) Erfinder: **Harasim, Anton, Dipl.-Phys.
Kirschenstrasse 18
D-8028 Taufkirchen(DE)**

(72) Erfinder: **Dietrich, Klaus, Dr.
Paul-Keller-Strasse 18
D-8035 Gauting(DE)**

(54) **Flüssigkristallmodulator zur Sprach- und Informationsübertragung im sichtbaren und Infrarotbereich.**

(57) Die Erfindung bezieht sich auf einen Lichtmodulator auf Flüssigkristallbasis zur Übertragung von Sprache mittels Licht in Luft, Wasser und anderen Medien, wodurch eine großflächige Modulation von Licht im sichtbaren oder infraroten Bereich in einem schmalen, aber einstellbaren Wellenlängenbereich ermöglicht wird. Ausführungsbeispiele hierfür werden erläutert und in Aufbau und Funktion beschrieben.

FIG. 1

MBB
Patentabteilung

1

0187218
10.12.84, 0345A
Kre/we
9651

Flüssigkristallmodulator zur Sprach- und Informationsübertragung im sichtbaren und Infrarotbereich

Die Erfindung betrifft einen Lichtmodulator auf Flüssigkristallbasis zur ein- oder mehrkanaligen Übertragung von analogen und digitalen Informationssignalen
(z. B. Sprache) mittels Licht in gasförmigen, flüssigen
und festen Medien.

Flüssigkristallzellen werden heutzutage vorwiegend in
Displayanwendungen verwendet. Für diese Anwendungen
kommt es weniger auf Schnelligkeit als auf steile elektrooptische Kennlinien an, um hohe Multiplexraten zu
erzielen. In den meisten Fällen ist die Frequenz der
Wechselspannung ohne operationelle Bedeutung. Sie dient
in Displayanwendungen nur dazu, um elektrolytische Zersetzungen der Flüssigkristallmischung zu verhindern.

Weiterhin ist bekannt, daß Flüssigkristallmischungen
mit cholestrinischen Substanzen dotiert werden können,
um Anti-Reserve Twisting bei Drehzellen, die nach dem
Schadt-Helfrich-Effekt arbeiten, zu vermeiden. Auch in
sogenannten Guest-host-Effekten werden solche cholestrinischen Dotierstoffe verwendet, um den Flüssigkristallmischungen in der Zellenanordnung eine Verdrillung
zu geben. In diesen Anwendungen ist jedoch die Konzentration der Dotierung so gewählt, daß weder ein lineares Verhalten noch eine für die Sprachübertragung erforderliche schnelle Modulation erzielbar ist.

Bei Anwendung einer der üblichen Flüssigkristalleffekte, wie "Twistal Nematic Mode", Guest-host-Effekt,
cholestrinisch-nematischer Phasenübergang, Detoriation
of Aligned-Phases usw., erhält man nur Modulationsschaltzeiten, die bestenfalls im Millisekundenbereich
liegen.

Aufgabe der Erfindung ist es, die großflächige Modulation von Licht im sichtbaren oder infraroten Bereich in einem schmalen, aber einstellbaren Wellenlängenbereich unter Verwendung von Flüssigkristallen zu ermöglichen, wobei die Modulationsbandbreite mindestens mehrere kHz umfassen soll, um Sprach- und Informationsübertragung zu ermöglichen. Weiterhin soll bei Verwendung von breitbandigen Lichtquellen (Glühlampen) eine mehrkanalige Informationsübertragung ermöglicht werden.

Diese Aufgabe wird durch die im Anspruch 1 aufgeführten Maßnahmen gelöst und durch die Merkmale der Unteransprüche werden vorteilhafte und weiterführende Ausgestaltungen angegeben. In der nachfolgenden Beschreibung werden Ausführungsbeispiele in Aufbau und Funktion erläutert und in den Figuren der Zeichnung schematisch dargestellt. Es zeigen:

Fig. 1   ein Ausführungsbeispiel eines Flüssigkristallmodulators;

Fig. 2   ein Diagramm einer typischen Durchlaßkurve für den Modulator gemäß Fig. 1;

Fig. 3a  ein Transmissions-Spannungsdiagramm des Modulators;

Fig. 3b  ein Spannungsdiagramm für das Sprachsignal;

Fig. 4   ein Blockschaltbild eines Ausführungsbeispiels zur Sprachübertragung;

Fig. 5   eine Empfangsschaltung für eine Mehrkanal-Informationsübertragung;

0187218

*MBB*

Patentabteilung

3

10.12.84, 0345A
Kre/we
9651

Fig. 6   ein Ausführungsbeispiel für die Segmentierung
eines großflächigen Modulators;

Fig. 7a  eine Anordnung mit Glühlampe und Modulator;

Fig. 7b  eine Anordnung mit Laser und Modulator;

Fig. 7c  eine Anordnung mit Modulator und Retroreflektor;

Fig. 7d  eine mehrkanalige Übertragungsanordnung;

Fig. 7e  eine Mehrkanal-Übertragungsanordnung mit übereinander angeordneten Flüssigkristallmodulatoren;

Fig. 7f  ein Ausführungsbeispiel für eine Rundumübertragungsanordnung;

Fig. 8   ein Blockschaltbild einer Schaltung zur Verbesserung des Klirrfaktors des LC-Modulators;

Fig. 9   eine schematische Darstellung von Draufsicht
und Querschnitt einer Flüssigkristallzelle mit
zwei Fotodetektoren zur Verbesserung des Klirrfaktors gemäß Fig. 8.

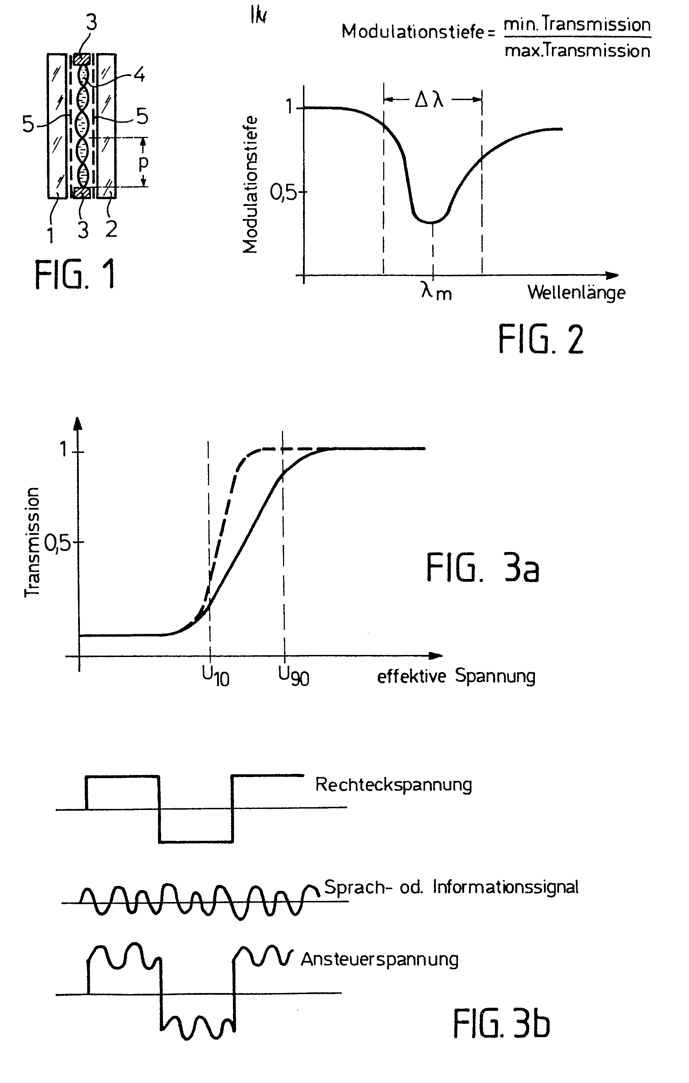

Der Flüssigkristallmodulator setzt sich nach einem Ausführungsbeispiel, wie es in Fig. 1 schematisch dargestellt ist, aus zwei oder mehreren hintereinander angeordneten und durch Abstandshalter 3 voneinander getrennten Glasplatten 1 und 2 zusammen. Diese Glasplatten 1 und 2 sind mit leitfähigen und transparenten
Elektroden 5 beschichtet. In dem oder den Zwischenräumen wird nun eine Flüssigkristallschicht 4 eingebracht,
die aus einem nematischen Flüssigkristall und einer

0187218

MBB

Patentabteilung

4

10.12.84. 0345A
Kre/we
9651

cholestrinischen Flüssigkeit besteht, so daß die Ganghöhe "p" der sich ausbildenden Schraubenstruktur nahezu gleich der Wellenlänge $\lambda$ des zu modulierenden Lichtes ist.

Die cholestrinische Dotierung des nematischen Flüssigkristalls bewirkt eine kurze Ausschaltzeit. Die Einschaltzeit wird durch die angelegte Spannungshöhe und durch die Dicke der Flüssigkristallschicht beeinflußt. Bei dem hier beschriebenen Ausführungsbeispiel ist eine Dicke von 6 µm vorgesehen. Dadurch können die Spannungspegel im Bereich der Spannungen von CMOS-Schaltungen gehalten werden. Eine derart aufgebaute Flüssigkristallzelle gemäß Fig. 1 arbeitet im Streumode und ohne Polarisatoren. Die Streuung ist bei gegebener Wellenlänge maximal, wenn die oben angegebene Anweisung $p = \lambda$ erfüllt ist. Der nutzbare Wellenlängenbereich wird durch die optische Anisotropie der Flüssigkristallsubstanz begrenzt. Außerhalb dieses Wellenlängenbereichs ist die Modulation nicht mehr ausgeprägt. Fig. 2 zeigt schematisch eine typische Durchlaßkurve eines solchen Modulators. Sollte eine Flüssigkristallzelle gemäß Fig. 1 nicht ausreichen um eine hohe Modulationstiefe zu erreichen, so können mehrere solcher Zellen hintereinander angeordnet werden.

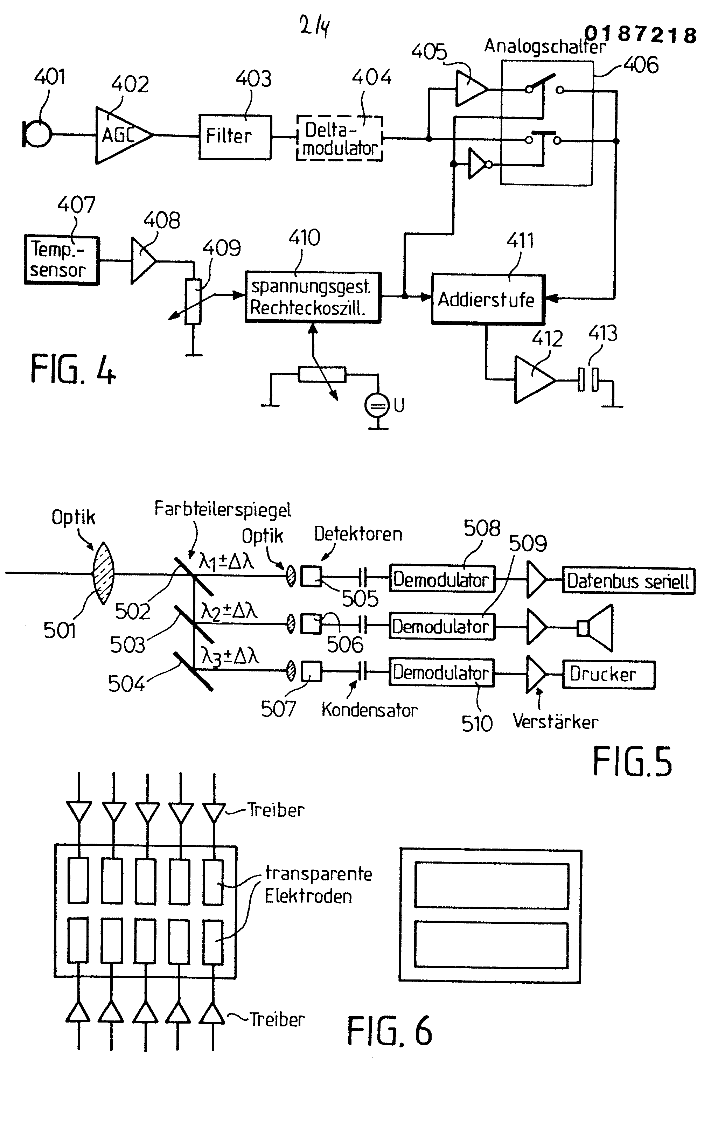

Im allgemeinen zeigen cholestrinisch dotierte Flüsssigkristall-Substanzen ein Hystereseverhalten, das sich auf die Modulation störend auswirkt. Das Durchfahren des gestrichelt eingezeichneten Astes in Fig. 3 wird jedoch dadurch vermieden, daß nur etwa 90 % des linearen Kennlinienstückes ausgenutzt wird. Eine Ansteuerspannung größer als $U_{90}$ wird bei der in Fig. 4 angegebenen Schaltung durch einen AGC 402 (automatic gain control) vermieden. Der Arbeitspunkt $U_{50}$ des LC-Modu-

**MBB**

Patentabteilung

5

**0187218**

10.12.84, 0345A
Kre/we
9651

lators 413 wird hierbei mit Hilfe des spannungsgesteuerten Rechteckoszillators 410 (Fig. 4) eingestellt, der symmetrisch zur Nullspannung schwingt.

Die Frequenz des Rechteckoszillators 410 wird zunächst mit dem Potentiometer 409 auf maximale Modulationstiefe eingestellt und dann mittels des Temperatursensors 407 und des nachfolgenden Verstärkers 408 automatisch verändert. Das Informations- bzw. das zu übertragende Sprachsignal des Mikrofons 401 gelangt vom AGC (automatic gain control) 402 auf ein Filter 403, das der Charakteristik des Übertragungsmediums Rechnung trägt. Ist z. B. Luft das Übertragungsmedium, so eignet sich hierbei als Filter ein handelsüblicher Bandspiegelungsfilter, der die tiefen Frequenzen in hohe Frequenzen und umgekehrt transformiert. Nützlich ist auch ein Scrambling Filter, der die zu übertragende Information vor unerwünschten Mithörern verschlüsselt (z. B. Ginzburg). Das so aufbereitete Informationssignal wird dann über einen Analogschalter 406 in der Addierstufe 411 zur Wechselspannung phasenrichtig hinzuaddiert. Die Phase des zu übertragenden Informationssignals wird hierbei über den Analogverstärker 405 und die beiden Analogschalter 406 umgedreht. Die Bauelemente 408 und 412 sind Analogverstärker, wobei letzterer der Addierstufe 411 zugeordnet ist.

Eine Empfangsschaltung einer mehrkanaligen Informationsübertragung ist in Fig. 5 angegeben. Die Trennung des Lichtes in verschiedene Wellenlängenbereiche erfolgt hierbei mit handelsüblichen Farbteilerspiegeln 502 bis 504, die reflexiv für eine ausgewählte Wellenlänge und transmitiv für die übrigen Wellenlängen oder umgekehrt erhältlich sind. Das so in die Wellenlängen aufgespaltene Licht gelangt dann auf Fotodetektoren 505

MBB

Patentabteilung

6

0187218

10.12.84, 0345A
Kre/we
9651

bis 507 und über Demodulatoren 508 bis 510 auf periphere Geräte. Die einzelnen Bauelemente und deren Schaltung bzw. Zuordnung dürfte klar aus der Fig. 5 hervorgehen, so daß ein weiteres Eingehen nicht erforderlich erscheint.

Eine weitere Erhöhung der zu übertragenden Datendichte läßt sich durch Segmentierung der Ansteuerflächen über fotolithographische Methoden erreichen. Bei großflächigen Ausführungsformen des Modulators kann mit solchem Verfahren die wirksame Kapazität des Modulators verkleinert und somit die Übertragung einer hohen Bandbreite sichergestellt werden. Fig. 6 zeigt ein Ausführungsbeispiel einer solchen Segmentierung.

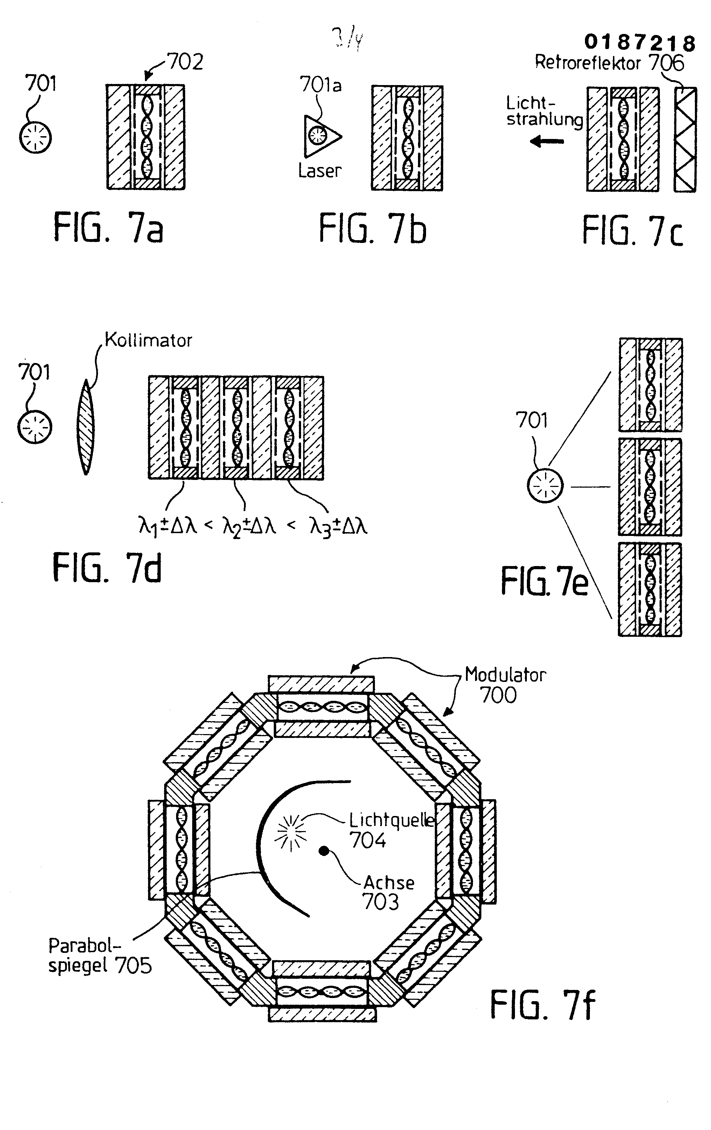

In Fig. 7a bis 7f werden verschiedene Anordnungen des erfindungsgemäßen Flüssigkristallmodulators beispielhaft aufgeführt. In Fig. 7a wird eine Glühlampe 701 vor einen Modulator montiert. Fig. 7b zeigt Laseranordnungen 701a und Fig. 7c Anordnungen mit Retroreflektor 706. Eine mehrkanalige Informationsübertragung zeigt Fig. 7d. Hierbei werden die erfindungsgemäßen Flüssigkristallmodulatoren mit Hilfe der cholestrinischen Substanz auf verschiedene Wellenlängenbereiche eingestellt, und zwar so, daß die Durchlaßkurven wie in Fig. 2 der jeweiligen Modulatoren jeweils deutlich voneinander getrennt sind. Diese Modulatoren werden dann hintereinandergeschaltet, wie in Fig. 7d, oder übereinander angeordnet, wie in Fig. 7e. Mit solchen Anordnungen kann bei Verwendung von breitbandigen Lichtquellen eine Vielzahl von Informationen gleichzeitig übertragen werden. Jedem der Modulatoren in Fig. 7d ist eine zustrebende Ansteuerschaltung wie in Fig. 4 zugeordnet.

Als Besonderheit einer Anwendung sei Fig. 7f aufge-

0187218

MBB
Patentabteilung

7

10.12.84, 0345A
Kre/we
9651

führt, die einen Rundumübertrager mit breitbandiger und mit gerichteter Strahlungscharakteristik arbeitenden Lichtquellen, wie sie z. B. in Leuchttürmen verwendet werden, zeigt. Die Modulatoren können hierbei als mehrkanalige Anordnungen, wie in Fig. 7d, hintereinandergeschaltet werden. Sechs solcher Einheiten werden in hexagonaler Form vor oder hinter die Linsen des Leuchtturms angeordnet.

Für eine störungsfreie Übertragung durch die Atmosphäre eignet sich z. B. entsprechend Fig. 4 ein Deltamodulatorverfahren 404. Solche Deltamodulatorverfahren sind als hoch integrierte Bauteile käuflich erwerbbar.

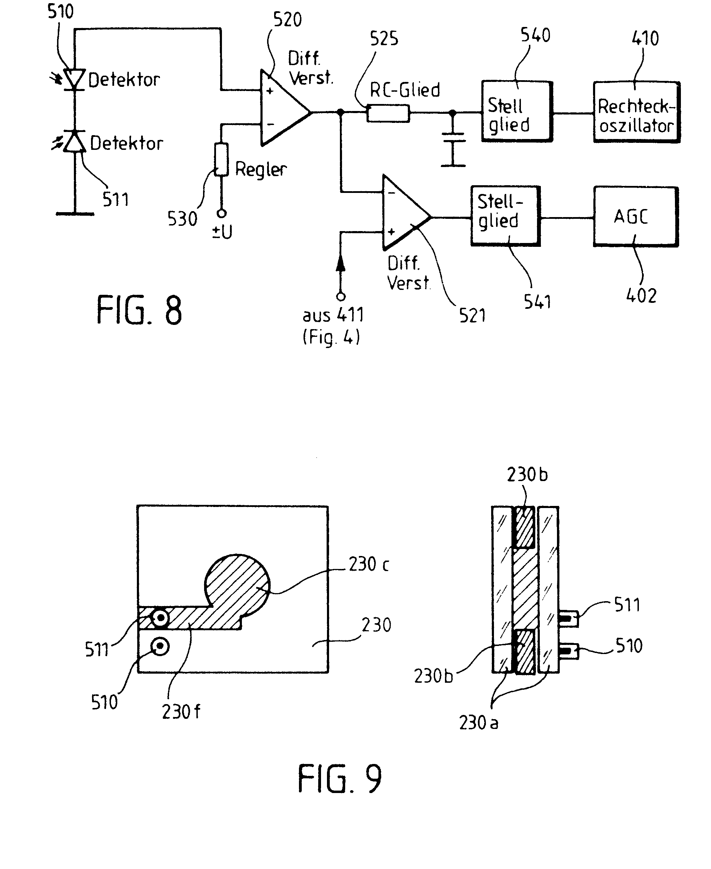

Eine weitere vorteilhafte Verbesserung der Übertragungsqualität zeigt Fig. 8 zur Verbesserung des Klirrfaktors. Zwei Fotodetektoren 510, 511 mit logarithmisch linearer Empfindlichkeit/Spannungscharakteristik sind am LC-Modulator 413 (Fig. 9) angebracht. Der Fotodetektor 511 sitzt vor einem LC-modulierten Bereich (hier z. B. Einfülloch 230f), während der Fotodetektor 510 außerhalb eines mit Flüssigkristallmischung gefüllten Bereiches sitzt (Fig. 9). Die vom Fotodetektor 511 empfangene modulierte Strahlung wird über ein RC-Glied 525 (Fig. 8) geglättet, so daß eine der mittleren Transmission des LC-Modulators 413 im Idealfall entsprechende Spannung zur Verfügung steht. Die beiden gegeneinander geschalteten Fotodetektoren 510, 511 ergeben am Eingang des Differenzverstärkers 520 eine Spannung, die dem Quotienten des eingestrahlten Lichtes entspricht. Mit dem Regler 530 wird dieser Wert auf den Arbeitspunkt $U_{50}$ eingestellt. Jede Temperaturverschiebung des Arbeitspunktes wird automatisch über das Stellglied 540, das auf den Rechteckoszillator 410 wirkt, nachgeregelt. Mit dem Differenzverstärker 521

*MBB*

Patentabteilung

8

0187218

10.12.84, 0345A
Kre/we
9651

wird das modulierte Helligkeitssignal mit dem Ansteuersignal des LC-Modulators 413 (Fig. 4) verglichen. Jede
Abweichung vom Sollwert wird über ein Stellglied 541
des AGC 402 (Fig. 4) ausgeregelt. Mit diesem Verfahren
lassen sich eventuell auftretende Nichtliniearitäten
der Kennlinie des LC-Modulators 413 kompensieren und
damit seinen Klirrfaktor beträchtlich erniedrigen.

Damit ist ein Lichtmodulator geschaffen, der optimal
zur ein- und mehrkanaligen Informationsübertragung in
verschiedenen Medien und auch im luftleeren Raum über
eine Entfernung von mehreren Kilometern und mit einer
Bandbreite bis über 10 kHz einsetzbar ist. Es kann im
sichtbaren und auch im infraroten Bereich (z. B. 8 bis
12 µm) moduliert werden. Hiermit wird die physikalische Erkenntnis verwirklicht, daß die Streuung einer
cholestrinischen Flüssigkristallmischung maximal ist,
wenn die Ganghöhe der Schraubenstruktur und die Größe
der aufgebrochenen Schraubenstrukturen in der gleichen
Größenordnung wie die Wellenlänge ist. Der Erfindungsgegenstand nutzt diese physikalische Tatsache für
schnelle Modulationsanwendungen aus. Als Flüssigkristalltextur wird eine fokale konische Textur von verdrillten cholestrinischen bzw. nematischen Phasen eingenommen, die ständig in dynamischer Bewegung gehalten
wird. Der Übergang vom cholestrinischen in den nematischen Zustand wird niemals vollzogen. Dieser Übergang
wäre für die erfindungsgemäße Aufgabe störend und unerwünscht.

0187218

*MBB*
Patentabteilung

L

10.12.84, 0345A
Kre/we
9651

Flüssigkristallmodulator zur Sprach- und Informationsübertragung im sichtbaren und Infrarotbereich

Patentansprüche

1. Wellenlängenbereichsselektierter Lichtmodulator
auf Flüssigkristallbasis zur ein- oder mehrkanaligen
Übertragung von Sprache oder anderen analogen oder
digitalen Informationssignalen mittels Licht festen,
gasförmigen und flüssigen Medien, dadurch  g e -
k e n n z e i c h n e t , daß als Flüssigkristallschicht (4) eine Flüssigkristallmischung verwendet wird
(z. B. nematische mit cholestrinischen Substanzen dotiert), mit einer Schraubenstruktur, deren Ganghöhe "p"
ungefähr gleich der Wellenlänge $\lambda$ des zu modulierenden Lichtes ist und diese Flüssigkristallschicht zwischen mindestens zwei mit leitfähigen transparenten
Elektroden (5) versehenen und durch Abstandshalter (3)
voneinander getrennten Glasflächen (1, 2) bzw. für den
jeweiligen Wellenlängenbereich transparenten Material
eingebracht wird und diese so gebildete Modulatorzelle
mit einer Wechselspannung angesteuert wird, auf die das
zu modulierende analoge oder digitale Signal phasenrichtig aufaddiert wird, wobei die Frequenz und die
effektive Spannung der Wechselspannung so gewählt wird,
daß die Modulationstiefe bei der verwendeten Flüssigkristallmischung ausreichend ist.

2. Lichtmodulator nach Anspruch 1, dadurch  g e -
k e n n z e i c h n e t , daß die effektive Spannung
des auf die oszillierende Wechselspannung aufaddierten
Informationssignals so begrenzt wird, daß die Sättigungsspannung der elektrooptischen Kennlinie nicht erreicht wird.

0187218

MBB

2

10.12.84, 0345A
Kre/we
9651

Patentabteilung

3. Lichtmodulator nach den Ansprüchen 1 oder 2, dadurch g e k e n n z e i c h n e t , daß eine mehrkanalige Sprach- und Informationsübertragung durch Hinter- oder Übereinanderreihung von Modulatorzellen erreicht wird, deren jeweilige Flüssigkristallschichten (4) auf verschiedene Wellenlängenbereiche abgestimmt sind und die unabhängig voneinander angesteuert werden.

4. Lichtmodulator nach den Ansprüchen 1 bis 3, dadurch g e k e n n z e i c h n e t , daß eine Frequenz- oder Impulskodemodulation zur störungsfreien Übertragung von digitalen Daten verwendet wird.

5. Lichtmodulator nach einem oder mehreren der Ansprüche 1 bis 4, dadurch g e k e n n z e i c h - n e t , daß das analoge Informationssignal auf eine oszillierende Wechselspannung aufmoduliert wird.

6. Lichtmodulator nach einem oder mehreren der Ansprüche 1 bis 5, dadurch g e k e n n z e i c h - n e t , daß die Ansteuerung der Modulatorzellen (Fig. 1) im Bereich $U_{10}-U_{90}$ der effektiven Spannung (Fig. 3a) mit Hilfe einer elektronischen Einrichtung zur automatisch kontrollierten Verstärkung AGC (402) erfolgt.

7. Lichtmodulator nach einem oder mehreren der Ansprüche 1 bis 6, dadurch g e k e n n z e i c h - n e t , daß die Umschaltfrequenz der Wechselspannung so gewählt ist, daß dabei die Modulationstiefe maximal wird.

0187218

10.12.84, 0345A
Kre/we
9651

8. Lichtmodulator nach einem oder mehreren der Ansprüche 1 bis 7, dadurch   g e k e n n z e i c h - n e t , daß zur Erhöhung der Signaldichte die Ansteuerflächen des Modulators segmentiert werden (Fig. 6).

9. Lichtmodulator nach einem oder mehreren der Ansprüche 1 bis 8, dadurch   g e k e n n z e i c h - n e t , daß die mehrkanalige Modulatoranordnung (700) um eine rotierende Parabolspiegel-Lichtsendeeinrichtung (703, 704, 705) angeordnet ist.

10. Lichtmodulator nach einem oder mehreren der Ansprüche 1 bis 9, dadurch   g e k e n n z e i c h - n e t , daß zwei logarithmisch empflindliche Fotodetektoren (510, 511) dem LC-Modulator (413) so zugeordnet sind, daß das Ausgangssignal der gegeneinander geschalteten Fotodetektoren (510, 511) einem Differenzverstärker (520) mit Regler (530) zugeführt wird.

11. Lichtmodulator nach einem oder mehreren der Ansprüche 1 bis 10, dadurch   g e k e n n z e i c h - n e t , daß die Frequenz und die effektive Spannung der Wechselspannung automatisch so gewählt wird, daß unabhängig von der Temperatur des Flüssigkristalls der Modulator einem optimalen Arbeitspunkt gehalten wird.

0187218

Modulationstiefe $= \dfrac{\text{min. Transmission}}{\text{max. Transmission}}$

FIG. 1

FIG. 2

FIG. 3a

Rechteckspannung

Sprach- od. Informationssignal

Ansteuerspannung

FIG. 3b

0187218

**FIG. 4**

401 402 AGC 403 Filter 404 Delta-modulator 405 Analogschalter 406

407 Temp.-sensor 408 409 410 spannungsgest. Rechteckoszill. 411 Addierstufe 412 413

U

**FIG. 5**

Optik Farbteilerspiegel Optik Detektoren

501 502 503 504

$\lambda_1 \pm \Delta\lambda$  $\lambda_2 \pm \Delta\lambda$  $\lambda_3 \pm \Delta\lambda$

505 506 507 Kondensator

508 509 510 Verstärker

Demodulator → Datenbus seriell
Demodulator →
Demodulator → Drucker

**FIG. 6**

Treiber

transparente Elektroden

Treiber

0187218

701

702

**FIG. 7a**

701a

Laser

**FIG. 7b**

Retroreflektor 706

Lichtstrahlung

**FIG. 7c**

701

Kollimator

$\lambda_1 \pm \Delta\lambda \ < \ \lambda_2 \pm \Delta\lambda \ < \ \lambda_3 \pm \Delta\lambda$

**FIG. 7d**

701

**FIG. 7e**

Modulator
700

Lichtquelle
704

Achse
703

Parabolspiegel 705

**FIG. 7f**

FIG. 8

FIG. 9